(19) Europäisches Patentamt
European Patent Office
Office européen des brevets

(11) **EP 1 291 751 A2**

(12) **EUROPEAN PATENT APPLICATION**

(43) Date of publication:
**12.03.2003 Bulletin 2003/11**

(51) Int Cl.⁷: **G06F 3/023**

(21) Application number: **02255786.2**

(22) Date of filing: **20.08.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **10.09.2001 JP 2001273402**

(71) Applicant: **Alpine Electronics, Inc.
Tokyo (JP)**

(72) Inventor: **McGovern, John,
c/o Alpine Electronics Inc.
Iwaki-city, Fukushima (JP)**

(74) Representative: **Kensett, John Hinton
Saunders & Dolleymore,
9 Rickmansworth Road
Watford, Hertfordshire WD18 0JU (GB)**

(54) **Keyboard display method**

(57)     A keyboard display method displays normal character keys in a normal character display area (NCA) of a keyboard display area displayed on a display screen (16) and special character keys other than the normal character keys in a special character display area (SCA). When it is necessary to enter more special characters than the maximum number of special characters ($N_{MAX}$) that can be displayed in the special character display area (SCA), all the special characters are divided into a plurality of groups. The special character keys in each of the groups and a request key (MK) for requesting display of the special characters in the other group are displayed. When the request key (MK) is operated, the special character keys in the other group are displayed in the special character display area (SCA).

FIG. 1

**Description**

BACKGROUND OF THE INVENTION

1. Field of the Invention

The present invention relates to keyboard display methods, and more particularly relates to a keyboard display method for an apparatus for displaying a keyboard on a display screen and, in response to the operation (operation) of predetermined keys on the keyboard, entering characters assigned to the keys.

2. Description of the Related Art

There are apparatuses for displaying a keyboard on a display screen (monitor) and, in response to the operation of predetermined keys on the keyboard, entering characters assigned to the keys. For example, in a navigation apparatus for giving vehicle traveling guidance so that the vehicle can reach a desired destination, it is necessary to enter a city name or a street name when specifying the destination by an address, an intersection, or a POI (Point Of Interest). In such a case, a keyboard is displayed on a display screen, and predetermined keys on the keyboard are operated in sequence. As a result, the city name or the street name can be entered.

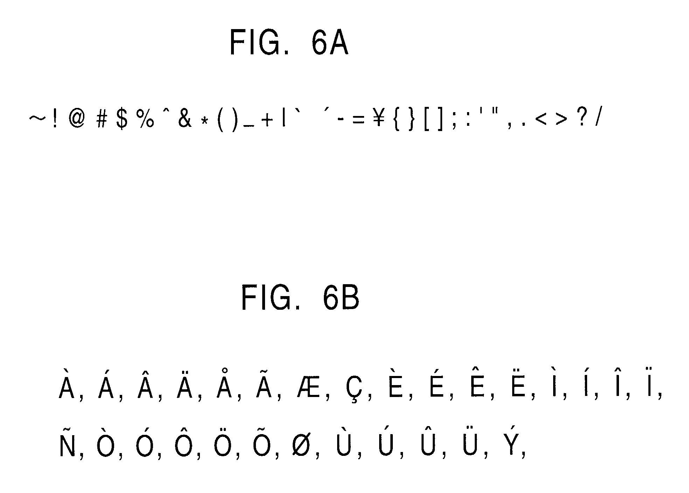

The keyboard displayed on the display screen includes a normal character display area for displaying normal character keys, such as the alphabet and numerals, and a special key display area for displaying special character keys other than the normal characters. For example, a maximum of twelve special characters can be displayed in the special character display area. It is impossible to display more than twelve special characters. The special characters include 33 symbols shown in Fig. 6A and the 28 accented characters displayed in Fig. 6B.

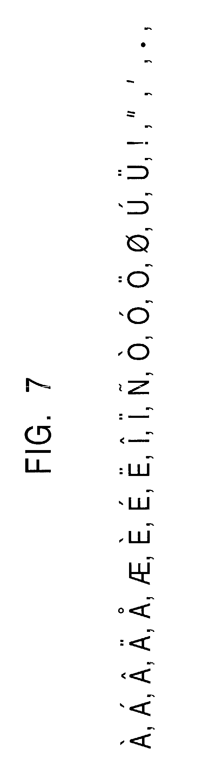

For a known navigation apparatus, twelve special characters are sufficient, and no problem is caused. In contrast, multilingual navigation apparatuses that have recently been used in Europe are required to be compatible with an increasing number of languages. Accordingly, the number of accented characters that are required to be entered using the keyboard is increasing. As navigation apparatuses become multifunctional, the number of symbols that are required to be entered using the keyboard is increasing. Thus, multilingual navigation apparatuses to be used in Europe are required to enter the 22 special characters shown in Fig. 7 using the keyboard. As described above, however, the special character display area can only display a maximum of twelve special characters.

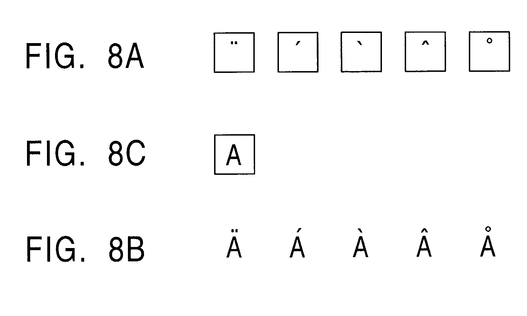

In order to enter all accented characters, accent symbols are displayed in the special character display area, and the accented characters can be entered by simultaneously operating the alphabet characters A, E, I, N, O, and U and the accent symbols. Figs. 8A to 8C show a case in which the alphabet character A and the accent symbols are simultaneously operated to enter the alphabet character A with the accent symbols, namely, the accented characters.

In the above-described method, it is necessary to simultaneously operate two keys, and hence the character entering operation becomes burdensome. In addition, not all special symbols can be entered by the above-described method.

SUMMARY OF THE INVENTION

Accordingly, it is an object of the present invention to enable all special characters to be entered by a simple operation.

A keyboard display method displays normal character keys in a normal character display area of a keyboard displayed on a display screen and special character keys other than the normal characters in a special character display area of the keyboard. When it is necessary to enter more special characters than the maximum number of special characters that can be displayed in the special character display area, all the special characters are divided into a plurality of groups. The special character keys in each of the groups and a request key for requesting display of the special characters in the other group are displayed. When the request key is operated, the special keys in the other group are displayed in the special character display area. Accordingly, all the special characters can be displayed and entered by a simple operation.

When only special characters with a possibility of being entered next are displayed in the special character display area, these special characters with a possibility of being entered next may be searched for. When the number of detected special characters exceeds the maximum number of special characters that can be displayed in the special character display area, all the detected special characters may be divided into a plurality of groups. The special character keys in each of the groups and a request key for requesting display of the special characters in the other group may be simultaneously displayed. When the request key is operated, the special character keys in the other group may be displayed in the special character display area. Accordingly, when displaying only special characters with a possibility of being entered next, all the special characters can be displayed and entered by a simple operation.

BRIEF DESCRIPTION OF THE DRAWINGS

Fig. 1 illustrates the schematic configuration of a navigation apparatus according to the present invention;

Fig. 2 is a flowchart showing a process of displaying a keyboard according to a first embodiment of the present invention;

Figs. 3A to 3C show examples of displayed keyboards when there are 22 special characters shown in Fig. 7;

Fig. 4 is a flowchart showing a process of displaying a keyboard according to a second embodiment of the present invention;

Fig. 5 shows an example of a displayed keyboard in the second embodiment;

Figs. 6A and 6B show examples of special characters:

Fig. 7 shows 22 required special characters; and

Figs. 8A to 8C illustrate a known accented character entering method.

DESCRIPTION OF THE PREFERRED EMBODIMENTS

(A) Outline of Navigation Apparatus

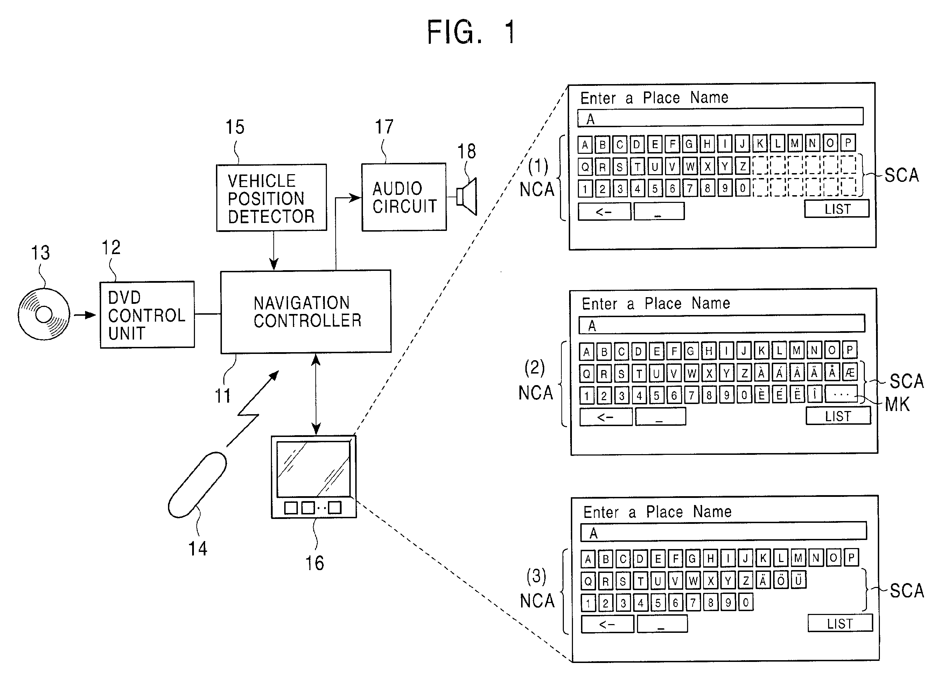

Fig. 1 shows the schematic configuration of a navigation apparatus according to the present invention. A navigation controller 11 performs navigation control, such as map rendering control for rendering a map of the vicinity of the vehicle position, destination entering control, and path planning/guidance control. Also, the navigation controller 11 appropriately displays a keyboard when entering a destination and performs destination entering control. In response to a request from the navigation controller 11, a DVD (Digital Versatile Disk) control unit 12 reads a desired map from a DVD 13 and inputs the map to the navigation controller 11. A remote control 14 is a unit for entering menu selection, map scrolling, and destination search to the navigation controller 11. A vehicle position detector 15 detects the vehicle position and includes a distance sensor for generating a pulse every time the vehicle travels a predetermined distance, an angle sensor for measuring the direction in which the vehicle is traveling, and a GPS (Global Positioning System) reception unit. A display unit 16 displays a map and a menu, and appropriately displays the keyboard. The display unit 16 includes a display on/off switch and a TV/navigation selector switch in the edge portion thereof. An audio circuit 17 converts intersection-guidance audio data output from the navigation controller 11 into analog data and outputs the analog data from a speaker 18 by controlling the tone and the volume.

In order to enter a destination, the navigation controller 11 appropriately displays a keyboard on a display screen. Portions (1) to (3) in Fig. 1 show examples of displayed keyboards when a location name is entered to set the destination. Portion (1) shows a case in which the number of special characters that are required to be entered is zero. In this case, a normal character display area NCA displays the alphabet A to Z and the numerals 0 to 9, and a special character display area (represented by dotted lines) SCA displays nothing.

Portion (2) shows a case in which the number of special characters that are required to be entered exceeds the maximum number of special characters that can be displayed in the special character display area SCA (e.g., twelve characters). The normal character display area NCA displays the alphabet A to Z and the numerals 0 to 9, and the special character display area SCA displays some of the special characters (ten special characters) and a more key MK for requesting display of the other special characters. In other words, when the number of special characters that are required to be entered exceeds the maximum number of special characters that can be displayed in the special character display area SCA (twelve characters in this case), all special characters are divided into a plurality of groups. The special keys in a first group and the more key MK are simultaneously displayed. The more key MK has a size of two characters. When the number of special characters is 22, the special characters are divided into three groups of 10, 10, and 2, respectively. When the more key MK is operated in a state shown in Fig. 1, the ten special keys in the second group and the more key MK are simultaneously displayed in the special character display area SCA. When the more key is again operated, the two special characters in the third group and the more key MK are simultaneously displayed in the special character display area SCA. When the more key MK is again operated, the state returns to the initial state shown.

Portion (3) shows a case in which the number of special characters that are required to be entered is three, and that the number of special characters that are required to be entered does not exceed the maximum number of special characters that can be displayed in the special character display area SCA (twelve characters in this case). In such a case, the normal character display area NCA displays the alphabet A to Z and the numerals 0 to 9, and the special character display area SCA displays all the special characters. On the other hand, the more key MK is not displayed.

(B) Keyboard Displaying Process in First Embodiment

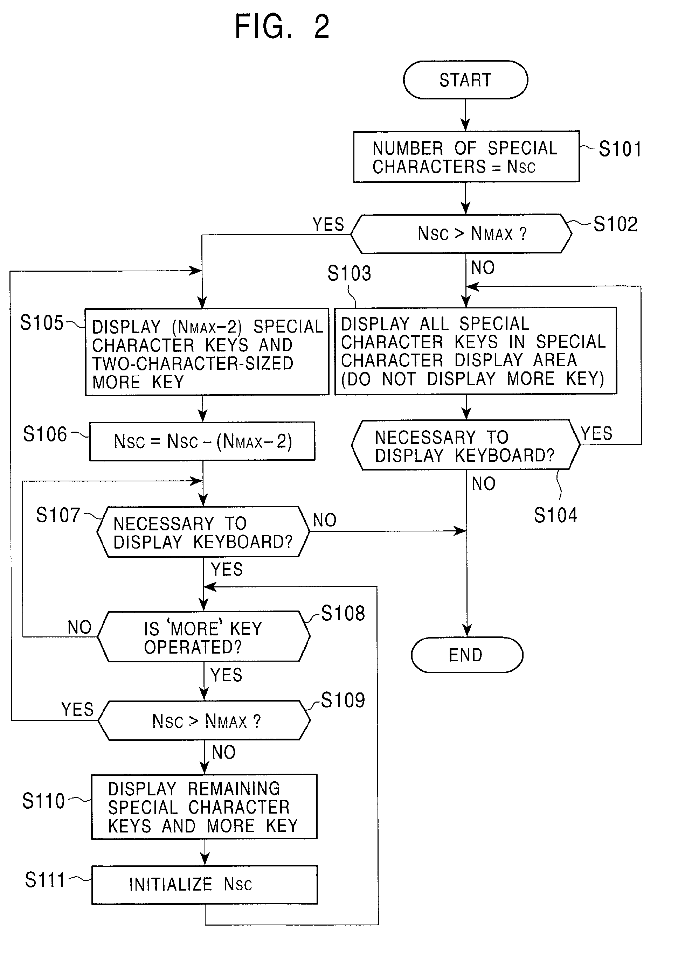

Fig. 2 is a flowchart showing a process of displaying the keyboard according to a first embodiment of the present invention.

When it becomes necessary to display the keyboard, all normal characters (the alphabet and the numerals) are displayed in the normal character display area NCA, and the special characters are displayed as follows.

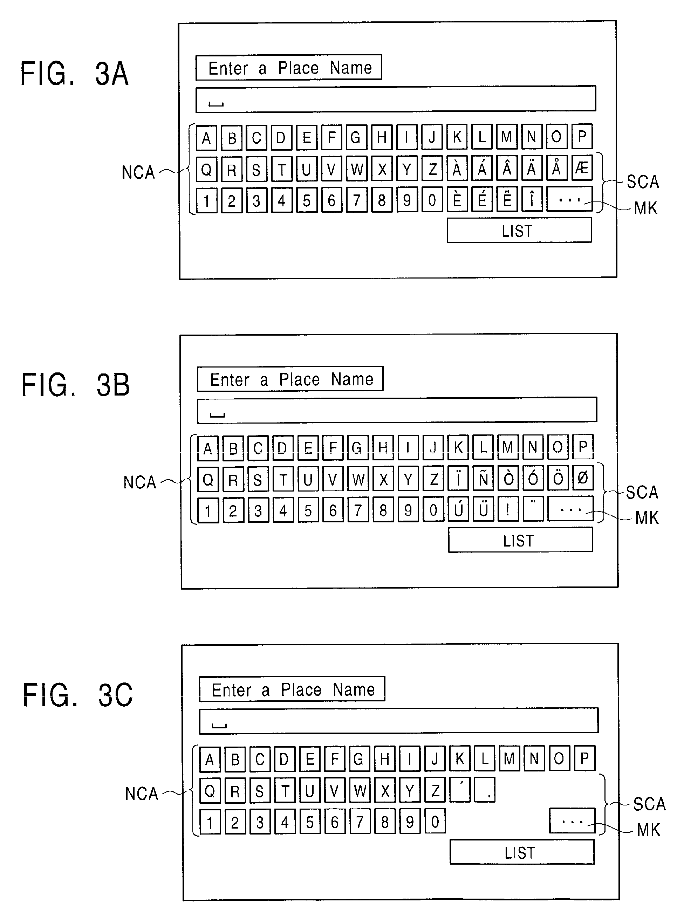

Specifically, the number of special characters that are required to be entered is represented by the number of undisplayed special characters $N_{SC}$ (step S101). It is checked whether or not the number of undisplayed special characters $N_{SC}$ exceeds the maximum number of special characters $N_{MAX}$ that can be displayed in the special character display area SCA (step S102). If $N_{SC} \leq N_{MAX}$, all special characters are displayed in the special character display area SCA (see portion (3) in Fig. 3) (step S103). It is determined whether or not it is necessary to continue displaying the keyboard (step S104). If it is unnecessary, the keyboard displaying process is terminated. If the determination in step S104 is affirmative (Yes), the keyboard continues to be displayed.

In contrast, in step S102, if the number of undisplayed special characters $N_{SC}$ exceeds the maximum number of special characters $N_{MAX}$, that is, if $N_{SC} > N_{MAX}$, then ($N_{MAX}$ - 2) special character keys in the first group and the two-character-sized more key MK are displayed in the special character display area SCA (see portion (2) in Fig. 1) (step S105). In accordance with the following equation, the number of undisplayed special characters $N_{SC}$ is updated (step S106):

$$N_{SC} = N_{SC} - (N_{MAX} - 2)$$

After $N_{SC}$ is updated, it is checked whether or not it is necessary to continue displaying the keyboard (step S107). If it is unnecessary, the keyboard displaying process is terminated. In contrast, if the determination in step S107 is affirmative (Yes), it is checked whether or not the more key MK is operated (step S108). If the more key MK is not operated, the keyboard continues to be displayed, and the processing in step S107 is repeated.

If the more key MK is operated in step S108, it is checked whether or not the number of undisplayed special characters $N_{SC}$ exceeds the maximum number of special characters $N_{MAX}$ (step S109). If $N_{SC} > N_{MAX}$, the process returns to step S105, and ($N_{MAX}$ - 2) special keys in the second group and the two-character-sized more key MK are displayed in the special character display area SCA (step S105). Then the subsequent processing is repeated.

In contrast, if $N_{SC} \leq N_{MAX}$ in step S109, all the remaining special characters in the last group (the third group) are displayed in the special character display area SCA (step S110). Then, the number of undisplayed special characters $N_{SC}$ is initialized, that is, the number of special characters that are required to be entered is set to the number of undisplayed special characters $N_{SC}$ (step S111), and the processing from step S108 onward is repeated. Since the initialization is performed in step S111, when the more key MK is operated, the special character keys in the first group and the more key MK can be simultaneously displayed.

Figs. 3A to 3C show examples of displayed keyboards when there are the 22 special characters shown in Fig. 7. The normal character display area NCA displays the alphabet A to Z and the numerals 0 to 9, and the special character display area SCA displays the special character keys and the more key MK. Since the number of undisplayed special characters $N_{SC}$ (= 22) is greater than the maximum number of displayable special characters $N_{MAX}$, as shown in Fig. 3A, ten special keys in the first group and the more key MK are simultaneously displayed. When the more key MK is operated in the state shown in Fig. 3A, as shown in Fig. 3B, ten special character keys in the next group, that is, the second group, and the more key MK are displayed in the special character display area SCA. When the more key MK is operated in the state shown in Fig. 3B, two special character keys in the third group, that is the last group, and the more key MK are displayed in the special character display area SCA. When the more key MK is operated in the state shown in Fig. 3C, the state returns to the initial state shown in Fig. 3A.

(C) Keyboard Displaying Process in Second Embodiment

When entering a destination to the navigation apparatus, a city name or a street name is entered. By arranging city names and street names in alphabetical order into a database, candidates for characters that appear subsequent to an entered character string (a case in which zero characters are entered is also included) can be obtained. In order to facilitate the entering operation, only character candidates to be entered next are displayed or highlighted, or alternatively characters other than the character candidates are shaded out. In a second embodiment of the present invention, the normal characters are displayed as described above. Concerning the special characters, only special characters that are candidates are displayed in the special character display area SCA, and special characters other than the candidates are not displayed in the special character display area SCA. When the number of special character candidates exceeds the maximum number of special characters $N_{MAX}$ that can be displayed in the special character display area SCA, a grouping display process similar to that in the first embodiment is performed.

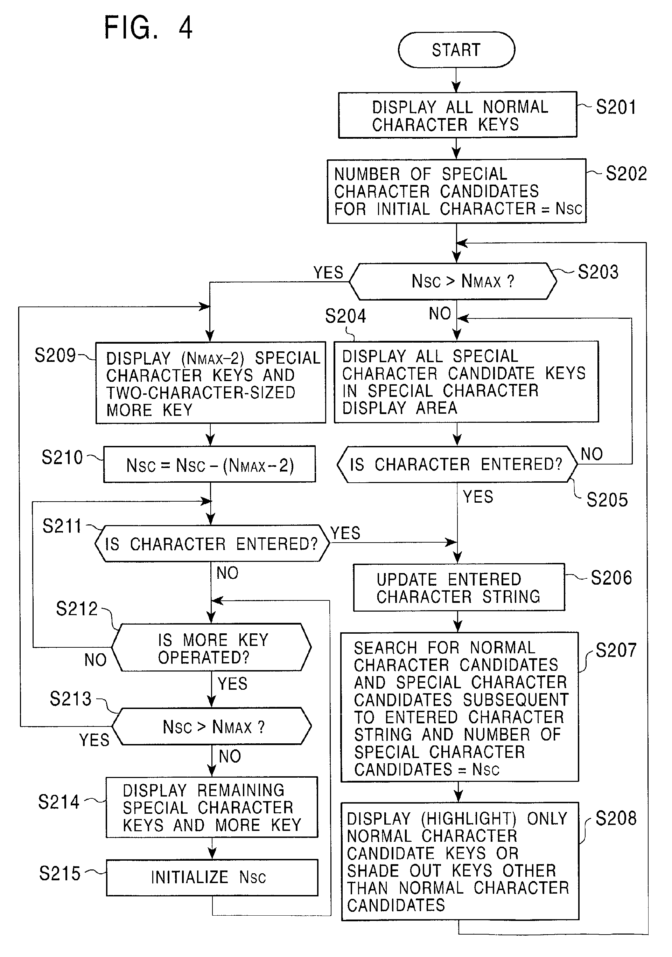

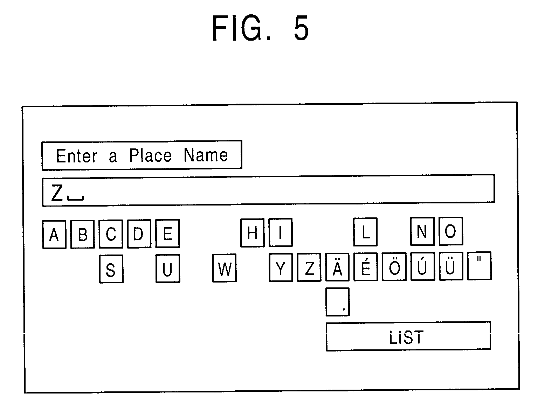

Fig. 4 is a flowchart showing a process of displaying the keyboard in the second embodiment. Fig. 5 shows an example of the displayed keyboard in the second embodiment.

When it becomes necessary to display the keyboard, all normal characters (the alphabet and the numerals) are displayed in the normal character display area NCA (step S201), and special characters are displayed as follows.

Specifically, the process searches special characters that are required to be entered for candidates for a special character that can be used as the initial character of a character string, and the number of special character candidates is set to the number of undisplayed special characters $N_{SC}$ (step S202). It is checked whether or not the number of undisplayed special characters $N_{SC}$ exceeds the maximum number of special characters $N_{MAX}$ that can be displayed in the special character display area SCA (step S203). If $N_{SC} \leq N_{MAX}$, all the special character key candidates are displayed in the special character display area SCA (step S204). Fig. 5 shows an example in which the number of undisplayed special characters $N_{SC}$ is seven, which is less than the maximum number of special characters $N_{MAX}$ (= 12), and hence all the special character candidates are displayed.

It is determined whether or not a character is entered (step S205). If no character is entered, in step S204, the special characters continue to be displayed. If a character is entered in step S205, the entered character string is updated (step S206). Then, the process searches for normal character candidates and special character candidates subsequent to the entered character string, and the number of special character candidates is set to the number of undisplayed special characters $N_{SC}$ (step S207). Only the normal character candidate keys are displayed or highlighted in the normal character display area NCA, or alternatively keys other than the normal character candidates are shaded out (step S208). Subsequently, the processing from step S203 onward is repeated. Fig. 5 shows an example in which, concerning the normal characters, only the normal character candidate keys are displayed.

In contrast, if, in step S203, the number of undisplayed special characters $N_{SC}$ exceeds the maximum number of special characters $N_{MAX}$, that is, if $N_{SC} > N_{MAX}$, ($N_{MAX}$ -2) special character keys in the first group and the two-character-sized more key MK are displayed in the special character display area SCA (step S209). Then, the number of undisplayed special characters $N_{SC}$ is updated by the following equation (step S210):

$$N_{SC} = N_{SC} - (N_{MAX} - 2)$$

After $N_{SC}$ is updated, it is checked whether or not a character is entered (step S211). If no character is entered, it is checked whether or not the more key MK is operated (step S212). If the more key MK is not operated, the keyboard continues to be displayed, and the processing in step S211 is repeated. If he more key MK is not operated and a character is entered in step S211, in step S206, the entered character string is updated. Then, the subsequent processing is repeated.

If no character is entered, and the more key MK is operated in step S212, it is checked whether or not the number of undisplayed special characters $N_{SC}$ exceeds the maximum number of special characters $N_{MAX}$ (step S213). If $N_{SC} > N_{MAX}$, the process returns to step S209, and ($N_{MAX}$ -2) special character keys in the second group and the two-character-sized more key MK are displayed in the special character display area SCA (step S209). Then, the subsequent processing is repeated.

In contrast, if $N_{SC} \leq N_{MAX}$ in step S213, all the remaining special characters in the last group (third group) are displayed in the special character display area SCA (step S214). Then, the number of undisplayed special characters $N_{SC}$ is initialized, that is, the number of special character candidates is initialized as the number of undisplayed special characters $N_{SC}$ (step S215), and the processing from step S212 onward is repeated. Since the initialization is performed in step S215, when the more key MK is operated, the special character keys in the first group and the more key MK can be simultaneously displayed.

The above-described process is repeated. When it becomes unnecessary to display the keyboard, the keyboard displaying process is terminated.

Although a case in which the present invention is applied to a navigation apparatus has been described in the above description, the present invention is not limited to the navigation apparatus. It should be understood that the present invention is applicable to all apparatuses for displaying a keyboard on a display screen and for entering characters.

**Claims**

1. A keyboard display method for an apparatus for displaying a keyboard on a display screen (16) and, by operating a predetermined key on the keyboard, entering a character assigned to the key, comprising:

   displaying normal character keys in a normal character display area (NCA) of the keyboard;
   displaying special character keys other than the normal characters in a special character display area (SCA) of the keyboard;
   dividing all the special characters into a plurality of groups when it is necessary to enter more special characters than the maximum number of special characters ($N_{MAX}$) that can be displayed in the special character display area (SCA);
   displaying the special character keys in each of the groups and a request key (MK) for requesting display of the special characters in the other group; and
   displaying the special keys in the other group in the special character display area (SCA) when the request key (MK) is operated.

2. A keyboard display method according to Claim 1, wherein a database of character string groups is searched for special characters with a possibility of being entered next, and the detected special characters are displayed in the special character display area (SCA).

3. A keyboard display method according to claim 1, wherein, when the number of detected special characters is less than or equal to the maximum number of special characters ($N_{MAX}$) that can be displayed in the special character display area (SCA), all the detected special characters are displayed in the special character display area (SCA).

4. A keyboard display method according to claim 2, wherein, when the number of detected special characters is less than or equal to the maximum number of special characters ($N_{MAX}$) that can be displayed in the special character display area (SCA), all the detected special characters are displayed in the special character display area (SCA).

5. A keyboard display method according to claim 1 or 2, wherein, when the request key (MK) is operated while the special characters in the last group and the request key (MK) are being displayed, the special characters in the first group and the request key (MK) are simultaneously displayed.

6. A keyboard display method according to any one of claims 1 to 4, wherein, in a multilingual navigation apparatus, city names are put into a database, and the keyboard is displayed when entering a city name.

7. A keyboard display method according to any one of claims 1 to 4, wherein, in a multilingual navigation apparatus, street names are put into a database, and the keyboard is displayed when entering a street name.

8. A keyboard display method according to any one of claims 1 to 4, wherein an entered character string is updated when a character is entered, and
   normal character candidates and special character candidates subsequent to the entered character string are searched for, and the special characters other than the detected candidates are not displayed in the special character display area (SCA).

9. A keyboard display method according to any one of claims 1 to 4, wherein only normal character candidate keys are displayed or highlighted in the normal character display area (NCA), or keys other than the normal character candidates are shaded out.

10. A keyboard display method according to any one of claims 1 to 4, wherein the special characters include accented characters in European languages.

## FIG. 1

15 VEHICLE POSITION DETECTOR

17 AUDIO CIRCUIT

18

13

12 DVD CONTROL UNIT

NAVIGATION CONTROLLER

11

14

16

**(1) NCA**

Enter a Place Name

A

| A | B | C | D | E | F | G | H | I | J | K | L | M | N | O | P |
| Q | R | S | T | U | V | W | X | Y | Z |

| 1 | 2 | 3 | 4 | 5 | 6 | 7 | 8 | 9 | 0 |

<-     _         LIST

SCA

**(2) NCA**

Enter a Place Name

A

| A | B | C | D | E | F | G | H | I | J | K | L | M | N | O | P |
| Q | R | S | T | U | V | W | X | Y | Z | À | Á | Â | Ä | Å | Æ |
| 1 | 2 | 3 | 4 | 5 | 6 | 7 | 8 | 9 | 0 | È | É | Ë | Î | ··· |

<-     _         LIST

SCA
MK

**(3) NCA**

Enter a Place Name

A

| A | B | C | D | E | F | G | H | I | J | K | L | M | N | O | P |
| Q | R | S | T | U | V | W | X | Y | Z | Ä | Ö | Ü |
| 1 | 2 | 3 | 4 | 5 | 6 | 7 | 8 | 9 | 0 |

<-     _         LIST

SCA

EP 1 291 751 A2

EP 1 291 751 A2

# FIG. 2

```
                              ┌─────────────┐
                              │    START    │
                              └──────┬──────┘
                                     │
                          ┌──────────▼──────────┐
                          │ NUMBER OF SPECIAL   │ ─ S101
                          │ CHARACTERS = Nsc    │
                          └──────────┬──────────┘
                                     │
              YES          ╱─────────▼─────────╲
         ┌───────────────< │   Nsc > Nmax ?    │ ─ S102
         │                 ╲─────────┬─────────╱
         │        S103               │ NO
         │                           │
┌────────▼───────────┐    ┌──────────▼────────────────┐
│ DISPLAY (Nmax−2)   │    │ DISPLAY ALL SPECIAL       │
│ SPECIAL CHARACTER  │S105│ CHARACTER KEYS IN SPECIAL │
│ KEYS AND           │    │ CHARACTER DISPLAY AREA    │
│ TWO-CHARACTER-SIZED│    │ (DO NOT DISPLAY MORE KEY) │
│ MORE KEY           │    └──────────┬────────────────┘
└────────┬───────────┘               │
         │                ╱──────────▼──────────╲  YES
┌────────▼───────────┐    │   NECESSARY TO       │ ───────┐
│ Nsc = Nsc−(Nmax−2) │S106│   DISPLAY KEYBOARD?  │ S104   │
└────────┬───────────┘    ╲──────────┬──────────╱         │
         │                           │ NO                 │
         │                           │                    │
  ╱──────▼──────╲  NO       ┌─────────▼──────┐            │
  │ NECESSARY TO │─────────▶│      END       │            │
  │ DISPLAY      │ S107     └────────────────┘            │
  │ KEYBOARD?    │                                        │
  ╲──────┬──────╱                                         │
         │ YES                                            │
         │                                                │
  ╱──────▼──────╲  NO                                     │
  │ IS 'MORE' KEY│ S108                                   │
  │ OPERATED?    │                                        │
  ╲──────┬──────╱                                         │
         │ YES                                            │
         │                                                │
  ╱──────▼──────╲  YES                                    │
  │ Nsc > Nmax ? │ S109                                   │
  ╲──────┬──────╱                                         │
         │ NO                                             │
┌────────▼───────────┐                                    │
│ DISPLAY REMAINING  │ S110                               │
│ SPECIAL CHARACTER  │                                    │
│ KEYS AND MORE KEY  │                                    │
└────────┬───────────┘                                    │
         │                                                │
┌────────▼───────────┐                                    │
│ INITIALIZE Nsc     │ S111                               │
└────────┬───────────┘                                    │
         └────────────────────────────────────────────────┘
```

FIG. 3A

Enter a Place Name

A B C D E F G H I J K L M N O P
Q R S T U V W X Y Z À Á Â Ä Å Æ
1 2 3 4 5 6 7 8 9 0 È É Ë Î · · ·

NCA
SCA
MK

LIST

FIG. 3B

Enter a Place Name

A B C D E F G H I J K L M N O P
Q R S T U V W X Y Z Ï Ñ Ò Ó Ö Ø
1 2 3 4 5 6 7 8 9 0 Ú Ü ! ¨ · · ·

NCA
SCA
MK

LIST

FIG. 3C

Enter a Place Name

A B C D E F G H I J K L M N O P
Q R S T U V W X Y Z ´ .
1 2 3 4 5 6 7 8 9 0 · · ·

NCA
SCA
MK

LIST

EP 1 291 751 A2

FIG. 4

START

DISPLAY ALL NORMAL CHARACTER KEYS ~S201

NUMBER OF SPECIAL CHARACTER CANDIDATES FOR INITIAL CHARACTER = Nsc ~S202

Nsc > Nmax ? ~S203

YES →

NO

S204

DISPLAY ALL SPECIAL CHARACTER CANDIDATE KEYS IN SPECIAL CHARACTER DISPLAY AREA

S209~ DISPLAY (Nmax−2) SPECIAL CHARACTER KEYS AND TWO-CHARACTER-SIZED MORE KEY

S210~ Nsc = Nsc − (Nmax−2)

IS CHARACTER ENTERED? ~S205

NO

YES

S211~ IS CHARACTER ENTERED?

YES →

NO

UPDATE ENTERED CHARACTER STRING ~S206

S212~ IS MORE KEY OPERATED?

NO

YES

SEARCH FOR NORMAL CHARACTER CANDIDATES AND SPECIAL CHARACTER CANDIDATES SUBSEQUENT TO ENTERED CHARACTER STRING AND NUMBER OF SPECIAL CHARACTER CANDIDATES = Nsc ~S207

S213~ Nsc > Nmax ?

YES

NO

S214~ DISPLAY REMAINING SPECIAL CHARACTER KEYS AND MORE KEY

DISPLAY (HIGHLIGHT) ONLY NORMAL CHARACTER CANDIDATE KEYS OR SHADE OUT KEYS OTHER THAN NORMAL CHARACTER CANDIDATES ~S208

S215~ INITIALIZE Nsc

10

# FIG. 5

Enter a Place Name

Z␣

| A | B | C | D | E | | H | I | | L | | N | O |
|---|---|---|---|---|---|---|---|---|---|---|---|---|

| | S | | U | | W | | Y | Z | Ä | É | Ö | Ú | Ü | " |

.

LIST

# FIG. 6A

~ ! @ # $ % ˆ & * ( ) _ + | ` ´ - = ¥ { } [ ] ; : ' " , . < > ? /

# FIG. 6B

À, Á, Â, Ä, Å, Ã, Æ, Ç, È, É, Ê, Ë, Ì, Í, Î, Ï,

Ñ, Ò, Ó, Ô, Ö, Õ, Ø, Ù, Ú, Û, Ü, Ý,

# FIG. 7

À, Á, Â, Ã, Ä, Å, Æ, È, É, Ê, Ë, Ì, Í, Î, Ï, Ñ, Ò, Ó, Ô, Õ, Ö, Ø, Ú, Û, Ü, ! , " , ' , , , • , ,

FIG. 8A  ¨ ´ ` ^ °

FIG. 8C  A

FIG. 8B  Ä  Á  À  Â  Å